# EUROPEAN PATENT SPECIFICATION

(11) **EP 3 686 429 B1**
(45) Date of publication and mention of the grant of the patent: **19.04.2023**
(21) Application number: 18859687.8
(22) Date of filing: 21.09.2018
(51) Int. Cl.: F04B 39/00, B60P 3/20, F01C 21/00, F04B 39/14

(54) **TRANSPORT REFRIGERATING MACHINE**
TRANSPORTKÜHLMASCHINE
MACHINE DE TRANSPORT FRIGORIFIQUE

(30) Priority: 22.09.2017 JP 2017182632
(43) Date of publication of application: 29.07.2020
(73) Proprietor: Mitsubishi Heavy Industries Thermal Systems, Ltd., Minato-ku, Tokyo 108-8215 (JP)
(72) Inventor: TAKAHASHI, Wataru, Tokyo 108-8215 (JP); KAI, Masakazu, Tokyo 108-8215 (JP); HOKAZONO, Toshiyuki, Tokyo 108-8215 (JP)
(74) Representative: Cabinet Beau de Loménie
(86) International application number: PCT/JP2018/035181
(87) International publication number: WO 2019/059373

(56) References cited:
- WO-A1-2016/147785
- DE-T5-112014 005 119
- JP-A- H0 796 736
- JP-A- H04 184 025
- JP-A- 2017 066 943
- JP-U- S57 164 342
- US-B1- 6 352 247

## Description

### Technical Field

The present invention relates to a transport chiller.

### Background Art

A compressor for compressing a refrigerant is mounted on a vehicle. The compressor is supported in a predetermined posture by a bracket. For example, in PTL 1, a plurality of support legs are provided at a lower part of a compressor so as to be fixed to a bracket, and a plurality of flanges are provided at an upper part of the compressor so as to be fixed to the bracket. Each of the flanges is fixed to the bracket via an elastic body, and thereby it is suppressed that vibration accompanying the driving of the compressor is transmitted to the bracket. Documents US6353247 and WO2016/147785 present known structures of for a transport chiller.

### Citation List

### Patent Literature

[PTL 1] Japanese Unexamined Utility Model
Registration Application Publication No. 63-191277

### Summary of Invention

### Technical Problem

While it is necessary to support the compressor by isolating vibration generated by the compressor as in PTL 1, it is necessary to support the compressor with sufficient fixed strength with respect to forced vibration generated by the traveling vibration of a vehicle. As described above, it is difficult to secure the fixed strength with respect to the traveling vibration while securing a sufficient anti-vibration performance.

In view of such circumstances, an object of the present invention is to provide a transport chiller which supports a compressor such that the compressor has an anti-vibration performance and has fixed strength with respect to traveling vibration.

### Solution to Problem

In order to solve the problem, the transport chiller of the present invention adopts the following means.

That is, according to an aspect of the present invention, there is provided a transport chiller as defined in claim 1 including a compressor that compresses a refrigerant for cooling a transport container provided on a vehicle, a lower anti-vibration support member that supports a part below a centroid of the compressor with respect to a main body and has a lower elastic body, and an upper anti-vibration support member that supports a part above the centroid of the compressor with respect to the main body and has an upper elastic body. A spring constant of the upper elastic body is larger than a spring constant of the lower elastic body.

By adopting a configuration where the part below the centroid of the compressor is supported by the lower anti-vibration support member with respect to the main body and the part above the centroid of the compressor is supported by the upper anti-vibration support member with respect to the main body, both ends of the compressor are supported with the centroid interposed therebetween. Accordingly, the vibration displacement of the compressor can be suppressed in various vibration directions.

By making the spring constant of the upper elastic body of the upper anti-vibration support member larger than the spring constant of the lower elastic body of the lower anti-vibration support member, the vibration displacement of an upper part of the compressor can be made small compared to the lower part of the compressor. Accordingly, even when vibration generated when the vehicle travels is input as external vibration, the vibration displacement of the upper part of the compressor can be suppressed, and desired fixed strength of the compressor can be obtained.

As the upper elastic body and the lower elastic body, for example, a rubber vibration isolator can be used.

In the transport chiller according to the aspect of the present invention, a pipe that is connected to an upper part of the compressor is further included.

When the pipe is connected to the upper part of the compressor, there is a possibility that the pipe becomes damaged due to vibration transmitted from the compressor. However, since the vibration displacement of the upper part of the compressor is suppressed as described above, damage to the pipe can be suppressed. In particular, since a discharge pipe and a gas injection pipe which have a small pipe diameter compared to a suction pipe are connected to the upper part of the compressor, the pipe is effective.

The upper part of the compressor is, for example, above the centroid of the compressor.

Further, the upper anti-vibration support member may include a band that is provided on an outer periphery of the compressor and the upper elastic body that is provided between the band and the main body or the band and the compressor.

In the transport chiller according to the aspect of the present invention, the spring constant of the upper elastic body is set to a natural frequency larger than a representative frequency that represents a frequency when the vehicle travels.

Since the spring constant of the upper elastic body is set to be larger than the representative frequency that represents the frequency when the vehicle travels, it is possible to prevent the upper part of the compressor from being greatly vibrated due to the transmission of vibration generated when the vehicle travels.

As the representative frequency when the vehicle travels, a value determined by standards such as Japanese Industrial Standards (JIS) is used. For example, the representative frequency is 20 Hz.

In the transport chiller according to the aspect of the present invention, the spring constant of the lower elastic body is set to the natural frequency larger than the representative frequency.

Since the spring constant of the lower elastic body is set to the natural frequency larger than the representative frequency, the vibration of the compressor can be further suppressed.

### Advantageous Effects of Invention

Since the spring constant of the upper elastic body above the centroid of the compressor is made larger than the spring constant of the lower elastic body below the centroid of the compressor, the compressor can be supported such that the compressor has an anti-vibration performance and has fixed strength with respect to traveling vibration.

### Brief Description of Drawings

Fig. 1 is a side view illustrating a vehicle on which a transport chiller of the present invention is mounted.
Fig. 2 is a perspective view illustrating a fixing structure of a compressor of the transport chiller according to a first embodiment of the present invention.
Fig. 3 is a schematic configuration view illustrating a vibration model of Fig. 2.
Fig. 4 is a graph showing vibration transmissibility with respect to a road surface vibration frequency.
Fig. 5 is a cross-sectional view illustrating a first modification example of the present invention.
Fig. 6 is a cross-sectional view illustrating a second modification example of the present invention. Description of Embodiments

Hereinafter, an embodiment according to the present invention will be described with reference to the drawings.

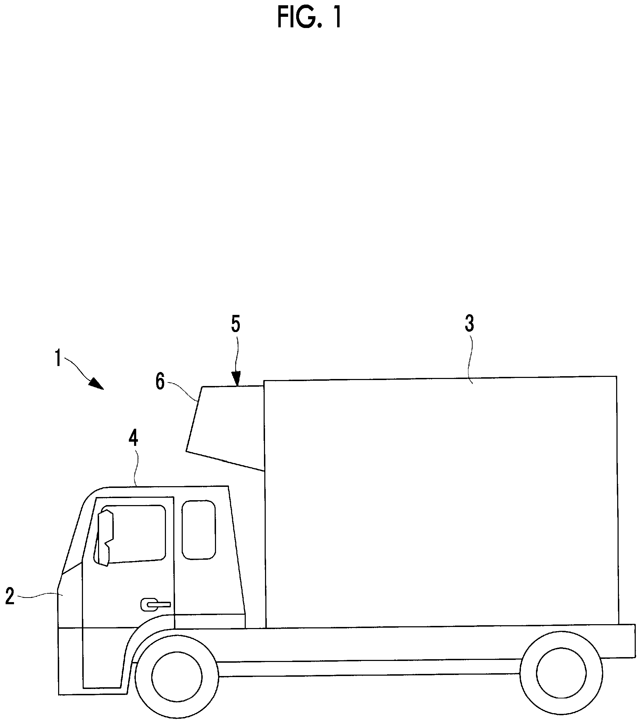

As illustrated in Fig. 1, a refrigerating car 1 includes a container (transport container) 3 in a vehicle 2. A transport chiller 5 is provided in front of the container 3 and above a cab 4.

The transport chiller 5 includes a compressor, a condenser, an expansion valve, and an evaporator that configure a refrigerating cycle. A control box including an electric circuit such as a compressor, a condenser, a blower fan, and a power conversion device, an engine, and a generator driven by the engine are accommodated inside a housing 6 of the transport chiller 5. An evaporator is provided inside the container 3, and the inside of the container 3 is cooled to a desired temperature by the evaporator.

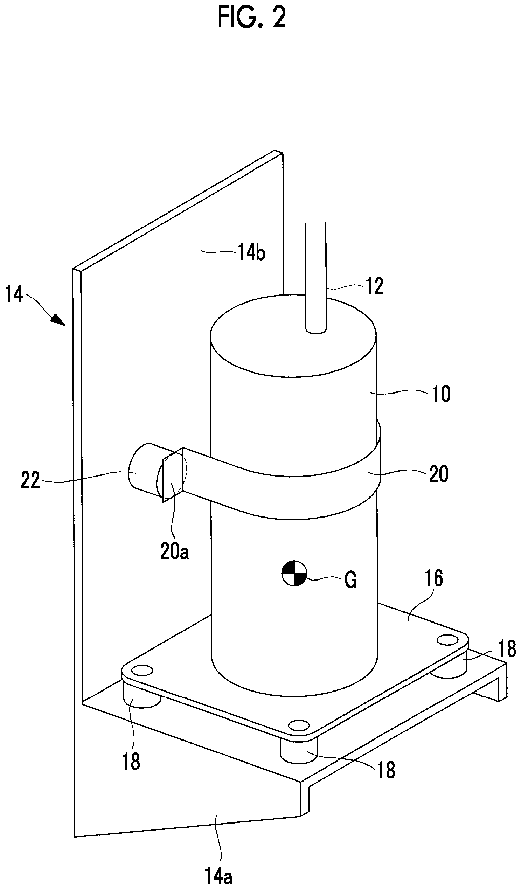

Fig. 2 illustrates a compressor 10 accommodated in the housing 6. The compressor 10 has a substantially cylindrical shape having an axis in a vertical direction. Inside the compressor 10, a compression mechanism, such as a scroll compression mechanism, and an electric motor for driving the compression mechanism are housed. Although not illustrated, the compression mechanism is provided on an upper side and the electric motor is provided on a lower side. Therefore, a centroid G of the compressor 10 is positioned at a position slightly lower than an intermediate height position of the compressor 10. Power is externally supplied to the electric motor, and a rotation speed of the compression mechanism is made variable by the power conversion device.

A discharge pipe 12 through which a compressed refrigerant is discharged is connected to an upper part of the compressor 10. In addition, an injection pipe (not illustrated) through which an intermediate-pressure refrigerant is supplied to the compression mechanism is also connected to the upper part of the compressor 10. The discharge pipe 12 and the injection pipe have a pipe diameter smaller than a suction pipe (not illustrated) that is connected to the compressor 10 and sucks a refrigerant.

The compressor 10 is fixed to a frame (main body) 14. The frame 14 is a strength member that supports each device provided in the housing 6 and bears structural strength. In Fig. 2, the frame 14 includes a lower wall member 14a that has an upper surface which is a horizontal surface and a vertical wall member 14b that is connected to the lower wall member 14a and is erected upward.

Leg parts 18 are provided below the compressor 10 via a bottom panel 16. The bottom panel 16 is a sheet metal structure fixed to a lower end of a main body of the compressor 10, and the leg part 18 is fixed to each of four corners. A lower part of the compressor 10 is fixed to an upper surface of the lower wall member 14a of the frame 14 via each leg part 18. Positions where the leg parts 18 are fixed to the bottom panel 16 are not limited to the four corners. For example, there may be one at a center of the lower part, and three or five or more around the lower part.

Each leg part 18 is an anti-vibration support member (lower anti-vibration support member) that includes a lower rubber vibration isolator (lower elastic body) (not illustrated) and isolates vibration between the compressor 10 and the frame 14.

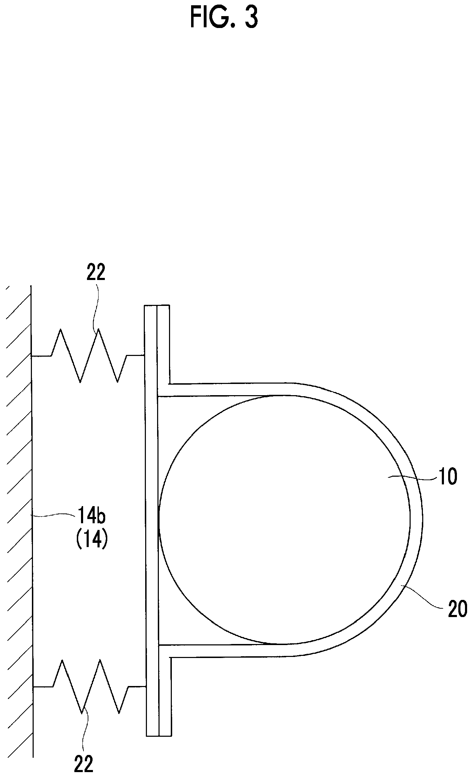

A metal band (band) 20 is wound around a body of the compressor 10. A position where the metal band 20 is provided is higher than the centroid G of the compressor 10. An end portion 20a of the metal band 20 is fixed to the vertical wall member 14b of the frame 14 via upper rubber vibration isolators (upper elastic body) 22. An upper anti-vibration support member that supports the upper part of the compressor 10 is configured by the metal band 20 and the upper rubber vibration isolators 22. Fig. 3 illustrates a vibration model of a support structure formed by the upper anti-vibration support member. As illustrated in Fig. 3, the compressor is supported by a flexible structure with the vertical wall member 14b of the frame 14 interposed between the upper rubber vibration isolators 22 which are elastic bodies.

A spring constant of the upper rubber vibration isolator 22 is larger than a spring constant of the rubber vibration isolator provided on the leg part 18. In a case where there are a plurality of rubber vibration isolators (lower rubber vibration isolators) provided on the leg part 18, a composite spring constant of the rubber vibration isolators are used. Specifically, a spring constant is adjusted by making the type of rubber of the upper rubber vibration isolator 22 different from the rubber vibration isolator provided on the leg part 18 in terms of a material and a shape.

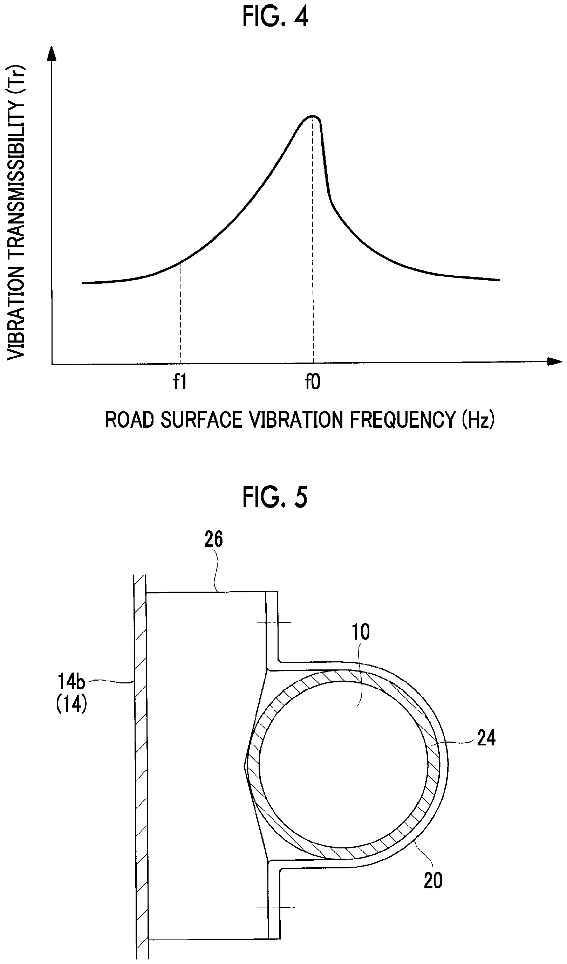

Next, a method of determining a spring constant of the upper rubber vibration isolator 22 will be described with reference to Fig. 4.

The spring constant of the upper rubber vibration isolator 22 is set to f0 (Hz) at which vibration transmissibility Tr is 1 or less. For example, the spring constant is set to a natural frequency f0 which is at least twice a predetermined value f1. The predetermined value f1 is a representative frequency that represents a frequency when the refrigerating car 1 travels, a value determined by standards such as Japanese Industrial Standards (JIS) is used, and the predetermined value is set to, for example, 20 Hz.

In addition, a spring constant (composite spring constant) of the rubber vibration isolator (lower rubber vibration isolator) provided on the leg part 18 may be larger than the predetermined value f1.

According to the embodiment, the following operational effects can be achieved.

By adopting a configuration where a part below the centroid G of the compressor 10 is supported by the lower wall member 14a of the frame 14 via the leg parts 18 and a part above the centroid G of the compressor 10 is supported by the vertical wall member 14b of the frame 14 via the metal band 20 and the upper rubber vibration isolators 22, both ends of the compressor 10 are supported with the centroid G interposed therebetween. Accordingly, the vibration displacement of the compressor 10 can be suppressed in various vibration directions such as vibration when the vehicle travels as described above and operation vibration of the compressor 10.

By making the spring constant of the upper rubber vibration isolator 22 larger than the spring constant of the lower rubber vibration isolator provided on the leg part 18, the vibration displacement of the upper part of the compressor 10 can be made relatively small compared to the lower part of the compressor 10. Accordingly, even when vibration generated when the refrigerating car 1 travels is input as external vibration, the vibration displacement of the upper part of the compressor 10 can be suppressed, and desired fixed strength of the compressor 10 can be obtained.

Since the vibration displacement of the upper part of the compressor 10 is suppressed by the upper rubber vibration isolators 22 having a spring constant larger than the lower rubber vibration isolator, damage to the discharge pipe 12 and the injection pipe can be suppressed. In particular, the discharge pipe and a gas injection pipe are effective due to a small pipe diameter compared to the suction pipe.

Since the spring constant of the upper rubber vibration isolator 22 is set such that the natural frequency is larger than the predetermined value f1 which is a representative frequency that represents a frequency when the refrigerating car 1 travels, it is possible to prevent the upper part of the compressor 10 from being greatly vibrated by the transmission of the vibration when the refrigerating car 1 travels.

In addition, when the spring constant (composite spring constant) of the rubber vibration isolator (lower rubber vibration isolator) provided on the leg part 18 is also made larger than the predetermined value f1, the vibration of the compressor 10 can be further reduced.

In the embodiment, a support structure for fixing the upper part can be modified as illustrated in Fig. 5.

As illustrated in Fig. 5, a band-shaped upper rubber vibration isolator 24 may be disposed on an inner peripheral side of the metal band 20. The upper rubber vibration isolator 24 is wound around the entire periphery of the body of the compressor 10. The upper part of the compressor 10 is supported with the band-shaped upper rubber vibration isolator 24 interposed between the compressor 10 and the metal band 20 as described above. The end portion 20a of the metal band 20 is fixed to an upper fixing bracket 26 fixed to the vertical wall member 14b of the frame 14.

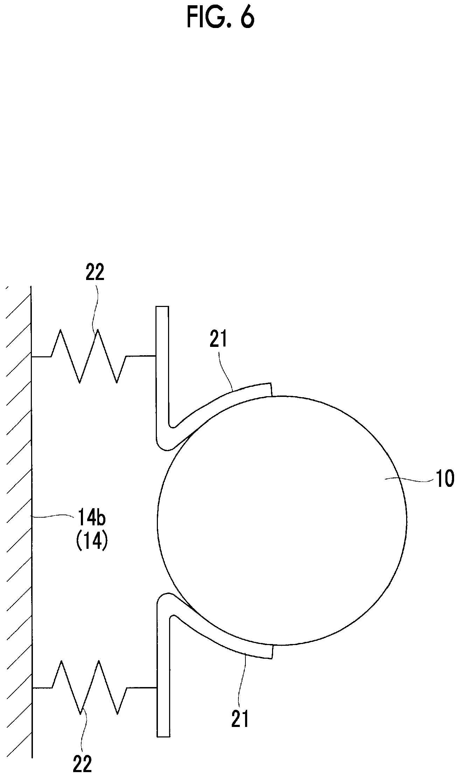

In addition, although the upper part of the compressor 10 is fixed using the metal band 20 and the lower part of the compressor 10 is fixed using the leg parts 18 in the embodiment described above, the present invention is not limited to the fixing methods, and any structure that can fix the compressor 10 using an elastic body having a predetermined spring constant may be adopted. For example, as illustrated in Fig. 6, a bracket 21 may be fixed to a side wall of the compressor 10 by welding or casting, and the upper rubber vibration isolators 22 may be provided between the bracket 21 and the vertical wall member 14b of the frame 14.

### Reference Signs List

1: refrigerating car
2: vehicle
3: container (transport container)
4: cab
5: transport chiller
6: housing
10: compressor
12: discharge pipe
14: frame (main body)
14a: lower wall member
14b: vertical wall member
16: bottom panel
18: leg part (lower anti-vibration support member)
20: metal band (band, upper anti-vibration support member)
20a: end portion
21: bracket
22, 24: upper rubber vibration isolator (upper elastic body)
26: upper fixing bracket
G: centroid

## Claims

1. A transport chiller (5) comprising:
a compressor (10) that compresses a refrigerant for cooling a transport container (3) provided on a vehicle (2) ;
a frame (14);
the frame 14 includes a lower wall member 14a that has an upper surface which is a horizontal surface and a vertical wall member 14b that is connected to the lower wall member 14a and is erected upward;
a lower anti-vibration support member (18) that supports a part below a centroid (G) of the compressor (10) with respect to the frame (14) and has a lower elastic body that is a rubber vibration isolator; and
an upper anti-vibration support member (20) that supports a part above the centroid (G) of the compressor (10) with respect to the frame (14) and has an upper elastic body (22, 24) that is a rubber vibration isolator,
wherein a spring constant of the upper elastic body (22, 24) is larger than a spring constant of the lower elastic body.

2. The transport chiller (5) according to Claim 1, further comprising:
a pipe that is connected to an upper part of the compressor (10).

3. The transport chiller (5) according to Claim 1 or 2,
wherein the upper anti-vibration support member (50) includes a band that is provided on an outer periphery of the compressor (10) and the upper elastic body (22, 24) that is provided between the band and the frame (14) or the band and the compressor (10).

4. The transport chiller (5) according to any one of Claims 1 to 3,
wherein the spring constant of the upper elastic body (22, 24) is set to a natural frequency larger than 20 Hz.

5. The transport chiller (5) according to Claim 4,
wherein the spring constant of the lower elastic body is set to the natural frequency larger than 20 Hz.

## Patentansprüche

1. Transportkühlaggregat (5), das Folgendes umfasst:
einen Verdichter (10), der zum Kühlen eines auf einem Fahrzeug (2) bereitgestellten Transportcontainers (3) ein Kältemittel verdichtet;
einen Rahmen (14);
der Rahmen 14 beinhaltet ein unteres Wandelement 14a, das eine obere Fläche aufweist, die eine horizontale Fläche ist, und ein vertikales Wandelement 14b, das mit dem unteren Wandelement 14a verbunden und aufgerichtet ist;
ein unteres Antivibrationsstützelement (18), das ein Teil unter einem Schwerpunkt (G) des Verdichters (10) mit Bezug auf den Rahmen (14) stützt und einen unteren elastischen Körper aufweist, bei dem es sich um einen Vibrationsisolator aus Gummi handelt; und
ein oberes Antivibrationsstützelement (20), das ein Teil über einem Schwerpunkt (G) des Verdichters (10) mit Bezug auf den Rahmen (14) stützt und einen oberen elastischen Körper aufweist (22, 24), bei dem es sich um einen Vibrationsisolator aus Gummi handelt,
wobei eine Federkonstante des oberen elastischen Körpers (22, 24) größer ist als eine Federkonstante des unteren elastischen Körpers.

2. Transportkühlaggregat (5) nach Anspruch 1, das ferner Folgendes umfasst:
eine Leitung, die mit einem oberen Teil des Verdichters (10) verbunden ist.

3. Transportkühlaggregat (5) nach Anspruch 1 oder 2,
wobei das obere Antivibrationsstützelement (50) ein Band beinhaltet, das an einem Außenumfang des Verdichters (10) und dem oberen elastischen Körper (22, 24) bereitgestellt ist, der zwischen dem Band und dem Rahmen (14) oder dem Band und dem Verdichter (10) bereitgestellt ist.

4. Transportkühlaggregat (5) nach einem der Ansprüche 1 bis 3,
wobei die Federkonstante des oberen elastischen Körpers (22, 24) auf eine Eigenfrequenz größer als 20 Hz eingestellt ist.

5. Transportkühlaggregat (5) nach Anspruch 4,
wobei die Federkonstante des unteren elastischen Körpers auf die Eigenfrequenz größer als 20 Hz eingestellt ist.

## Revendications

1. Machine de transport frigorifique (5) comprenant :
un compresseur (10) qui compresse un réfrigérant pour refroidir un contenant de transport (3) prévu sur un véhicule (2) ;
un bâti (14) ;
le bâti (14) comprend un élément de paroi inférieure (14a) qui a une surface supérieure qui est une surface horizontale et un élément de paroi verticale (14b) qui est raccordé à l'élément de paroi inférieure (14a) et est érigé vers le haut ;
un élément de support anti-vibration inférieur (18) qui supporte une partie au-dessous d'un centre de gravité (G) du compresseur (10) par rapport au bâti (14) et a un corps élastique inférieur qui est un isolateur de vibration en caoutchouc ; et
un élément de support anti-vibration supérieur (20) qui supporte une partie au-dessus du centre de gravité (G) du compresseur (10) par rapport au bâti (14) et a un corps élastique supérieur (22, 24) qui est un isolateur de vibration en caoutchouc,
dans laquelle une constante de rappel du corps élastique supérieur (22, 24) est supérieure à une constante de rappel du corps élastique inférieur.

2. Machine de transport frigorifique (5) selon la revendication 1, comprenant en outre :
un tuyau qui est raccordé à une partie supérieure du compresseur (10).

3. Machine de transport frigorifique (5) selon la revendication 1 ou 2,
dans laquelle l'élément de support anti-vibration supérieur (50) comprend une bande qui est prévue sur une périphérie externe du compresseur (10) et le corps élastique supérieur (22,24) qui est prévu entre la bande et le bâti (14) ou la bande et le compresseur (10).

4. Machine de transport frigorifique (5) selon l'une quelconque des revendications 1 à 3,
dans laquelle la constante de rappel du corps élastique supérieur (22, 24) est réglée sur une fréquence naturelle supérieure à 20 Hz.

5. Machine de transport frigorifique (5) selon la revendication 4,
dans laquelle la constante de rappel du corps élastique inférieur est réglée sur la fréquence naturelle supérieure à 20 Hz.
